# EUROPÄISCHE PATENTANMELDUNG

(11) **EP 0 570 857 A1**
(43) Veröffentlichungstag der Anmeldung: **24.11.1993**
(21) Anmeldenummer: 93107863.8
(22) Anmeldetag: 14.05.1993
(51) Int. Cl.: B65D 19/24, B29C 51/00

(54) **Transport- und Lagerpalette aus thermoplastischem Kunststoff**

(30) Priorität: 22.05.1992 DE 9206959 U
(71) Anmelder: RÖHM GMBH, D-64293 Darmstadt (DE)
(72) Erfinder: Müller, Michael, Dr., W-6140 Bensheim 3 (DE); Fehring, Karl-Heinz, W-6081 Stockstadt/Rh (DE); Hirsch, Manfred, W-6100 Darmstadt (DE); Theil, Alexander, W-6107 Reinheim 5 (DE)

(57) **Zusammenfassung**

Die Erfindung betrifft eine Transport- und Lagerpalette aus im wesentlichen recyclisiertem Kunststoff mit Schlagzähigkeiten von mindestens 3 kJ/m², wie z.B. recyclisiertem Polycarbonat, die aus einer Kunststoffplatte durch Thermoformen, insbesondere durch Tiefziehen, hergestellt wird.

## Beschreibung

### Gebiet der Erfindung

Die Erfindung betrifft Transport- und Lagerpaletten aus thermoplastischem Kunststoff mit eingeformten Füßen als Abstandshalter zu Boden oder anderen Paletten, die mit Gabein von Transportmaschinen aufgenommen und transportiert werden können, und die nach einem bestimmten Verfahren hergestellt sind.

### Stand der Technik

Paletten aus Kunststoffen sind bekannt. Sie sollen die üblicherweise aus Holz gefertigten Paletten, insbesondere aus Gründen des Gewichts, der höheren Wetterfestigkeit und ihrer preiswerteren Herstellbarkeit, ersetzen.

In der DE-OS 21 32 132 wird eine trogförmige Palette beschrieben, die als Einwegpalette in leichter Ausführung zu einem niedrigen Preis vorgesehen ist, und aus schlagfestem sowie frost- und wetterfestem Kunststoff bestehen kann. Sie kann beispielsweise aus einem Thermoplasten wie Polyethylen durch Vakuum- oder Pressverformung oder durch Spritzgußverfahren hergestellt werden.

Das deutsche Gebrauchsmuster G 91 03 462 beschreibt eine Flachpalette, in deren aus Kunststoff bestehendem Oberdeck eine relativ biegesteife Bewehrung aus Metall eingebettet ist. Die plattenförmigen Decks werden im Kunststoff-Spritzguß vorgefertigt und nach dem Spritzen wird die Bewehrung - Metallstab, z.B. ein hohler Vierkantstab - in beim Spritzguß vorgesehene Aussparungen eingeschoben.

Aus der DE-OS 19 32 637 ist eine Palette aus Kunststoff mit hoher Belastbarkeit bekannt. Dies ist dadurch erreicht, daß die Platte der Palette an ihrer Ober- und/oder Unterseite mit einer Riffelung in Längs- und/oder Querrichtung ausgerüstet ist. Über den dafür einzusetzenden Kunststoff und das Verfahren zur Herstellung einer solchen Palette sind keine Angaben gemacht.

Eine mit einer Spritzgußform hergestellte Transport- und Lagerpalette aus Kunststoff, die durch einen, abwechselnd aus wannenförmigen mit nach oben offenen Teilen und aus Brücken mit nach den Seiten offenen Teilen gebildeten, umlaufenden Fußkörper eine hohe Stabilität erhält, ist in der DE-OS 21 48 291 beschrieben.

Die Herstellung einer Palette aus Kunststoff durch Gießen eines vorbereiteten Kunststoffs in einer besonders gestalteten Gießform, ist aus der DE-OS 22 14 171 bekannt.

Auch Paletten aus Recycling-Kunststoffen sind bekannt. Zu deren Herstellung finden insbesondere Polyethylen- und Polypropylenrecyclate Anwendung. Die Paletten des Standes der Technik sind spritzgegossen. Aufgrund der Größe der Paletten und ihres komplizierten Aufbaus erfordert ihre Herstellung aufwendige und teure Spritzgußwerkzeuge. Die Belastbarkeit dieser Kunststoffpaletten, d.h. ihre Tragfähigkeit für Lasten ist gegenüber herkömmlichen Holzpaletten deutlich reduziert.

Vorteile haben die bekannten Kunststoffpaletten gegenüber Holzpaletten in ihrem relativ niedrigen Eigengewicht, jedoch ist dann ihre Belastbarkeit, d.h. ihre Tragfähigkeit für Lasten gegenüber den herkömmlichen Holzpaletten deutlich reduziert. Erst durch vielfache Anhebung der Kunststoffmasse lassen sich mit Polyethylen oder Polypropylen, Paletten mit Belastbarkeiten, die denen der Holzpaletten entsprechen, herstellen. Damit geht aber auch der zunächst vorhandene Preisvorteil der Kunststoffpalette verloren.

### Aufgabe und Lösung

Es bestand die Aufgabe aus Thermoplasten mit ausreichender Schlag- bzw. Kerbschlagzähigkeit, vorwiegend solchen aus recyclisierten Thermoplasten, nach einem einfachen Formgebungsverfahren, Transport- und Lagerpaletten herzustellen. Die Paletten-Formkörper sollen ihrerseits ausschließlich aus thermoplastischem Material bestehen und wieder recyclisierbar sein.

Die Lösung dieser Aufgabe besteht darin, daß die Palette aus einer Kunststoffplatte aus thermoplastischem Material mit notwendigen Schlag- und Kerbschlagzähigkeiten, durch Thermoformen (Warmformen) über einer Form hergestellt wird.

Das erfindungsgemäß zu verwendende thermoplastische Kunststoffmaterial soll schlagzähigkeitswerte von ≧ 3 kJ/m² (23^{o}C, ISO 180/1C) und Kerbschlagzähigkeitswerte von ≧ 3 kJ/m² (23^{o}C, ISO 180/1A) aufweisen. Im wesentlichen sind die Basismaterialien in den zur Warmformung zu den Paletten zu verwendenden Platten Recyclingmaterialien der in Betracht kommenden thermoplastischen Kunststoffe.

Bei dem Warmformen aus der vorzugsweise flachen Platte werden durch die vorgegebenen Umformwerkzeuge Konstruktionsmerkmale in der entstehenden Palette ausgestaltet, wie vor allem Füße, die für das Abstellen und die Stapelung, sowie Längs- und Querrillen, die als Verstrebungen wirken und für die mechanische Festigkeit und damit die Tragfähigkeit der Paletten wichtige Kriterien sind. Die gebildeten Verstrebungen, technisch als Sicken bekannt, wirken als versteifende Elemente und verringern die Durchbiegung der Palette unter Last wesentlich.

Die Erfindung betrifft danach:
Transport- und Lagerpalette aus thermoplastischem, im wesentlichen recyclisiertem Kunststoff mit Schlagzähigkeitswerten von mindestens 3 kJ/m², dadurch gekennzeichnet, daß die Palette durch Thermoformen aus einer Kunststoffplatte hergestellt wird.

Die Warmformung wird mit Hilfe eines Umformwerkzeugs durchgeführt, wobei als Konstruktionsmerkmale der Palette, Füße sowie Längs- und Querverstrebungen, sogenannte Sicken, gebildet werden.
Vorteilhaft wird die Thermoformung durch Anlegen von Vakuum unterstützt und die Umformung nach dem bekannten Tiefziehverfahren durchgeführt.

### Vorteile der erfindungsgemäßen Palette.

Die Schlagzähigkeits- und Kerbschlagzähigkeitseigenschaften des erfindungsgemäß zu verwendenden Kunststoffmaterials bewirken, daß die Paletten hoch bruchsicher bei der Handhabung, auch bei der Handhabung durch Maschinen, wie Gabelstaplern sind. Bei der Warmformung definiert ausgeformte Längs- und Querrillen stabilisieren als Verstrebungen gegen Durchbiegung und erlauben Traglasten bis 1500 kg pro m² Bodenfläche. Die ausgeformten Füße dienen zum Stapeln der Paletten und erlauben das Einfahren der Staplergabel. Das einzige Palettenmaterial ist Kunststoffmaterial, und zwar im wesentlichen Recyclingmaterial, und als solches wieder vollständig recyclisierbar. Im Vergleich zu den 14 bis 28 kg schweren Europaletten aus Holz, hat eine erfindungsgemäße Palette mit z.B. 4 kg bei vergleichbaren Trageeigenschaften, ein nur geringes Gewicht. Die Witterungsbeständigkeit der Recycling-Kunststoffpalette ist im Vergleich zu derjenigen einer Holzpalette wesentlich besser.

### Durchführung der Erfindung

Kunststoff-Basismaterialien
für die Bereitstellung von Halbzeug in Form von Platten, die dann erfindungsgemäß zu Paletten umgeformt werden, weisen Schlagzähigkeiten von mindestens 3 kJ/m², inbesondere > 10 kJ/m², vor allem > 35 kJ/m² und Kerbschlagzähigkeitswerte von ≧ 3, vorzugsweise ≧ 10 kJ/m², auf. Die Schlagzähigkeits- und Kerbschlagzähigkeitswerte gelten für 23^{o}C und sind nach ISO 180/1C bzw. ISO 180/1A bestimmt. Hierzu kommen vor allem Polymere mit Polycarbonatstruktur, wie das Bisphenol A-Polycarbonat (PC), Polyestercarbonate und Blends von Polycarbonat mit anderen Polymeren, wie z.B. PC/ABS oder PC/ASA in Frage. Aber auch schlagzähmodifizerte Polymethacrylat-Kunststoffe und Polymethacrylat-Blends mit ausreichender Schlag- bzw. Kerbschlagzähigkeit sind als Halbzeug-Platten für die Umformung zu Paletten der erfindungsgemäßen Art brauchbar.

Die Halbzeug-Platten sind im wesentlichen aus Recycling-Material hergestellt, wie es z.B. als Ausschuß oder Zuschnittabfall bei der Herstellung und Verarbeitung der Kunststoffe anfällt. Weiter werden Mischungen verschiedener, nicht sortenreiner Qualität, wie z.B. verschieden eingefärbtes Polymer einer Art, oder auch Mischungen von verschiedenen thermoplastischen Kunststoffen mit entsprechenden Schlagzähigkeitswerten als sogenanntes Regrind für die Herstellung der Halbzeug-Platte verwertet. So ist beispielsweise als ®PLEXALLOY HZ eine flache Platte, aus PC-Regrind hergestellt, auf dem Markt.

Alle für die erfindungsgemäße Verwendung genannten Thermoplaste können auch als füllstoffverstärkte Halbzeuge eingesetzt werden, so z.B. verstärkt mit Glasfasern, Talkum, Aluminiumhydroxid u.a. Auch können sie mit Farbstoffen bzw. Farbpigmenten in verschiedenen Farben zum Einsatz kommen.

### Umform-Verfahren

Die Umformung der Halbzeug-Platten zu den erfindungsgemäßen Paletten wird durch Anwendung äußerer Kräfte und Wärme in dem sogenannten Warmformverfahren bzw. Thermoformen erreicht. Dabei wird die Platte über einer Form durch Tiefziehen umgeformt. Der Umformungsprozeß wird oberhalb der Erweichungstemperatur, d.h. im Bereich des Dehnungsmaximums durchgeführt. Die Formen können aus Holz oder einem anderen widerstandsfähigen Material, z.B. glasfaserverstärktem Polyester, mit dem gut zu modellieren ist, oder auch aus Aluminium gefertigt sein. Die beim Thermoformen benötigten Kräfte sind relativ gering, so daß im allgemeinen Vakuum ausreicht. Bei dickeren Halbzeugplatten wird dieser Tiefziehprozeß noch durch mechanische oder pneumatische Hilfen unterstützt. Erwärmt werden kann mit Hilfe von Infrarotstrahlern. Bei ®PLEXALLOY HZ liegt die Umformtemperatur im Bereich von 190 bis 210^{o}C. (Ullmann, Encyklopädie der technischen Chemie, 4. Auflage, Band 15, S. 307 - 309).

### BEISPIEL

Aus ®PLEXALLOY HZ, 4 mm dicke Platte, wurde entsprechend den Maßen der Euro-Palette, eine Palette mit den Maßen 1200 mm x 800 mm über einem Holzwerkzeug durch Tiefziehen in einer Umformstation hergestellt.

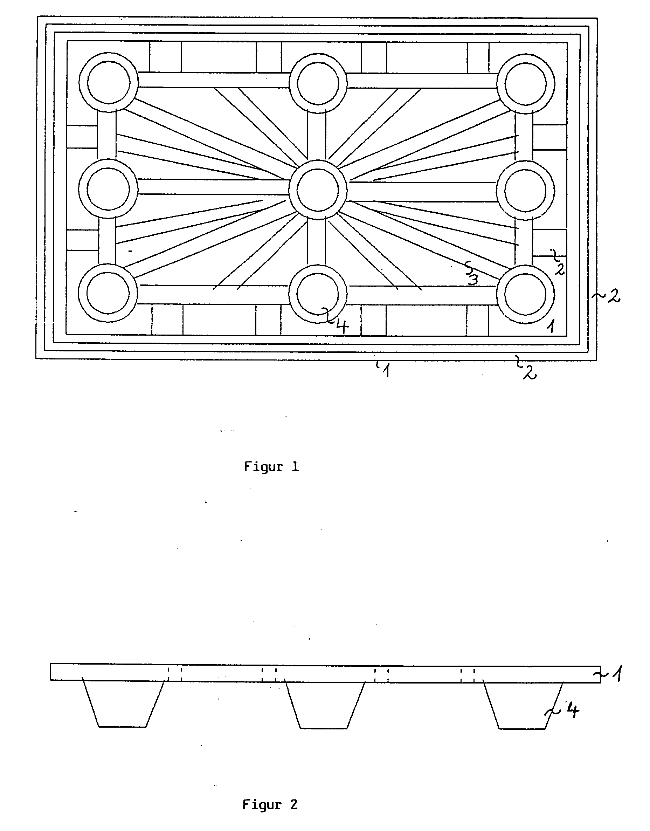

Die Erfindung ist nachstehend an den Figuren 1 und 2 aufgezeigt.
- **Figur 1**: eine Palette in Draufsicht, mit:
(1) Palettenebene, (2) Sicken parallel zu den Palettenrändern, (3) Diagonal-Sicken, (4) ausgeformte Füße.
- **Figur 2**: einen Schnitt durch die Palette der Figur 1 mit Fußkörpern, mit:
(1) Palettenebene, (4) ausgeformte Füße.

## Patentansprüche

1. Transport- und Lagerpalette aus thermoplastischem, im wesentlichen recyclisiertem Kunststoff mit Schlagzähigkeitswerten von mindestens 3 kJ/m²,
dadurch gekennzeichnet,
daß die Palette durch Thermoformen aus einer Kunststoffplatte hergestellt wird.

2. Transport- und Lagerpalette nach Anspruch 1, dadurch gekennzeichnet, daß bei deren Herstellung das Thermoformen durch Vakuumkräfte unterstützt wird.

3. Transport- und Lagerpalette nach den Ansprüchen 1 und 2, dadurch gekennzeichnet, daß sie aus der Kunststoffplatte durch Tiefziehen hergestellt wird.

4. Transport- und Lagerpalette nach den Ansprüchen 1 bis 3, dadurch gekennzeichnet, daß sie aus einer Platte aus recyclisiertem Polycarbonat hergestellt wird.

5. Transport- und Lagerpalette, die nach den Ansprüchen 1 bis 4 hergestellt ist.
